(19) Europäisches Patentamt
European Patent Office
Office européen des brevets

(11) EP 2 938 074 A1

(12) EUROPEAN PATENT APPLICATION

(43) Date of publication:
28.10.2015 Bulletin 2015/44

(51) Int Cl.:
H04N 19/117 (2014.01)    H04N 19/14 (2014.01)
H04N 19/105 (2014.01)    H04N 19/176 (2014.01)
H04N 19/61 (2014.01)    H04N 19/11 (2014.01)
H04N 19/593 (2014.01)

(21) Application number: 15163796.4

(22) Date of filing: 16.04.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 24.04.2014 EP 14305605

(71) Applicant: Thomson Licensing
92130 Issy-les-Moulineaux (FR)

(72) Inventors:
• Thoreau, Dominique
35576 Cesson-Sévigné (FR)

• Cherigui, Safa
69100 VILLEURBANNES (FR)
• Alain, Martin
35576 Cesson-Sévigné (FR)
• Guillotel, Philippe
35576 Cesson-Sévigné (FR)
• Guillemot, Christine
35042 Rennes (FR)

(74) Representative: Lorette, Anne
Technicolor
1, rue Jeanne d'Arc
92130 Issy-les-Moulineaux (FR)

(54) **METHODS FOR ENCODING AND DECODING A PICTURE AND CORRESPONDING DEVICES**

(57)    A method for decoding a picture divided into blocks is disclosed. The method comprises at least one iteration of:
a) determining (S20) for at least two blocks adjacent to a reconstructed part of the picture a priority level responsive at least to directional gradients computed in a causal neighborhood of said block; and
b) decoding (S22) a part of the picture comprising the block whose priority level is the highest.

```
                         ┌──────────┐
                        / blocks   /
                        └──────────┘
                             │
                             ▼                          S10
   ┌─────────────────────────────────────────┐
   │ determining for at least two blocks      │
   │ adjacent to a reconstructed part of the  │
   │ picture a priority level responsive to   │
   │ directional gradients computed in a      │
   │ causal neighborhood of said block        │
   └─────────────────────────────────────────┘
                             │
                             ▼                          S12
   ┌─────────────────────────────────────────┐
   │ encoding a part of the picture           │
   │ comprising the block whose priority      │
   │ level is the highest                     │
   └─────────────────────────────────────────┘
                             │
                             ▼
                        ┌──────────┐
                       / Coded     /
                       / picture   /
                       └──────────┘
```

**Figure 4**

**Description**

1. FIELD OF THE INVENTION

In the following, a method and a device for encoding a picture are disclosed. Corresponding decoding method and decoding device are further disclosed.

2. BACKGROUND OF THE INVENTION

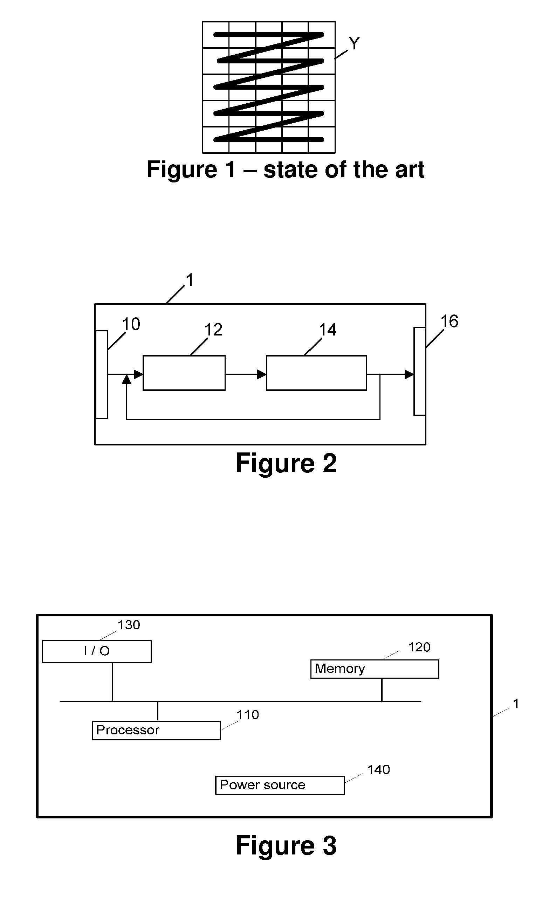

It is known to encode a picture divided into blocks by processing the blocks according to a predefined scan order. The scan order is usually specified in a coding standard (e.g. H.264, HEVC). The same scan order is used in the encoder and in the decoder. Exemplarily, in H.264 coding standard, macroblocks (i.e. blocks of 16 by 16 pixels) of a picture Y are processed line by line in a raster scan order as depicted on **Figure 1.** In a macroblock, the blocks are further processed according to a zig-zag scan order. Using such predefined scan orders may decrease the coding efficiency.

3. BRIEF SUMMARY OF THE INVENTION

A method for decoding a picture divided into blocks is disclosed. The method comprises at least one iteration of:

  a) determining for each of at least two blocks adjacent to a reconstructed part of the picture a priority level responsive at least to directional gradients computed in a causal neighborhood of the block; and
  b) decoding a part of the picture comprising the block whose priority level is the highest.

Adapting the scan order on the basis of the content of the picture increases the coding efficiency, e.g. decreases coding rate for a given quality or improves quality for a given coding rate. Specifically, taking into account directional gradients in a causal neighborhood favors the blocks having a causal neighborhood well adapted to intra prediction tools.
In an exemplary embodiment, determining for each of at least two blocks adjacent to a reconstructed part of the picture a priority level comprises:

  a1) computing, for a spatial direction, directional gradients along the block edge;
  a2) propagating the directional gradients along the spatial direction; and
  a3) determining an energy from the propagated directional gradients.

Advantageously, the spatial direction belongs to a plurality of spatial directions and the method further comprises:

  a4) repeating steps a1) to a3) for each spatial direction of the plurality of spatial directions; and
  a6) determining the highest energy, the highest energy being the priority for the current block.

Advantageously, the causal neighborhood belongs to a plurality of causal neighborhoods and the method further comprises before step a6):

  a5) repeating steps a1) to a4) for each causal neighborhood in the set of causal neighborhoods.

In a specific embodiment, the reconstructed part belongs to the group comprising:

  - the blocks located on the borders of the picture;
  - an epitome of the picture;
  - a block located at a specific position in the picture.

In a specific embodiment, in step b), the part of the picture comprising the block whose priority level is the highest is a macroblock and decoding the macroblock comprises at least one iteration of:

  a) determining for at least two blocks in the macroblock adjacent to the reconstructed part of the picture a priority level; and
  b) decoding first the block of the macroblock whose priority level is the highest.

In a variant, in step b), the part of the picture comprising the block whose priority level is the highest is a macroblock and decoding the macroblock comprises:

- determining a zig-zag scan order of blocks within the macroblock on the basis of at least the spatial position of a causal neighborhood with respect to the macroblock;
- decoding the blocks within the macroblock according to the zig-zag scan order.

Advantageously, the part of the picture comprising the block whose priority level is the highest is a macroblock encompassing the block.

In a variant, the at least two blocks are macroblocks and the part of the picture comprising the block whose priority level is the highest is the macroblock whose priority level is the highest.

A method for encoding a picture divided into blocks is also disclosed that comprises at least one iteration of:

a) determining for each of at least two blocks adjacent to a reconstructed part of the picture a priority level responsive at least to directional gradients computed in a causal neighborhood of the block; and
b) encoding a part of the picture comprising the block whose priority level is the highest.

In a specific embodiment, determining for each of at least two blocks adjacent to a reconstructed part of the picture a priority level comprises:

a1) computing for a spatial direction directional gradients along the block edge;
a2) propagating the directional gradients along the spatial direction; and
a3) determining an energy from the propagated directional gradients.

Advantageously, the spatial direction belongs to a plurality of spatial directions and the method further comprises:

a4) repeating steps a1) to a3) for each spatial direction of the plurality of spatial directions; and
a6) determining the highest energy, the highest energy being the priority for the current block.

Advantageously, the causal neighborhood belongs to a plurality of causal neighborhoods and the method further comprises before step a6):

a5) repeating steps a1) to a4) for each causal neighborhood in the set of causal neighborhoods.

A device for decoding a picture divided into blocks is disclosed that comprises at least one processor configured to:

- determine for at least two blocks adjacent to a reconstructed part of the picture a priority level responsive at least to directional gradients computed in a causal neighborhood of the block; and
- decode a part of the picture comprising the block whose priority level is the highest.

A device for decoding a picture divided into blocks is disclosed that comprises:

- means for determining for at least two blocks adjacent to a reconstructed part of the picture a priority level responsive at least to directional gradients computed in a causal neighborhood of the block; and
- means for decoding a part of the picture comprising the block whose priority level is the highest.

The devices for decoding are configured to execute the steps of the decoding method according to any of the embodiments and variants disclosed.

A device for encoding a picture divided into blocks is disclosed that comprises at least one processor configured to:

- determine for at least two blocks adjacent to a reconstructed part of the picture a priority level responsive at least to directional gradients computed in a causal neighborhood of the block; and
- encode a part of the picture comprising the block whose priority level is the highest.

A device for encoding a picture divided into blocks comprising:

- means for determining for at least two blocks adjacent to a reconstructed part of the picture a priority level responsive at least to directional gradients computed in a causal neighborhood of the block; and

- means for encoding a part of the picture comprising the block whose priority level is the highest.

The devices for encoding are configured to execute the steps of the encoding method according to any of the embodiments and variants disclosed.

The devices for encoding are configured to execute the steps of the encoding method according to any of the embodiments and variants disclosed.

A computer program product is disclosed that comprises program code instructions to execute of the steps of the decoding method according to any of the embodiments and variants disclosed when this program is executed on a computer.

A processor readable medium is disclosed that has stored therein instructions for causing a processor to perform at least the steps of the decoding method according to any of the embodiments and variants disclosed.

A computer program product is disclosed that comprises program code instructions to execute of the steps of the encoding method according to any of the embodiments and variants disclosed when this program is executed on a computer.

A processor readable medium is disclosed that has stored therein instructions for causing a processor to perform at least the steps of the encoding method according to any of the embodiments and variants disclosed.

## 4. BRIEF DESCRIPTION OF THE DRAWINGS

In the drawings, an embodiment of the present invention is illustrated. It shows:

- Figure 1 depicts a picture Y divided into blocks that are processed according to a classical raster scan order;
- Figure 2 depicts a device for encoding a picture divided into blocks according to a specific and non-limitative embodiment of the invention;
- Figure 3 represents an exemplary architecture of an encoding device according to a specific and non-limitative embodiment of the invention;
- Figure 4 represents a flowchart of a method for encoding a picture Y in a bitstream according to a specific and non-limitative embodiment of the invention;
- Figure 5 depicts a set of patches defined according to a specific and non-limitative embodiment of the invention;
- Figure 6 represents a picture Y comprising a reconstructed part delimited by a frontier $\delta\Omega$ and blocks to be coded/decoded;
- Figure 7 represents spatial directions for intra prediction in H.264;
- Figure 8 represents a flowchart of a method for determining the priority level of a block according to an exemplary and non-limitative embodiment of the invention;
- Figure 9 represents a current block delimited by a dashed line and a causal neighborhood located top left;
- Figure 10 represents the current block for which directional gradients for one direction are calculated along the frontier between the block and the causal neighborhood;
- Figure 11 represents various directional intra prediction modes as defined in H.264 standard;
- Figure 12 represents various directional intra prediction modes defined according a specific and non-limitative embodiment of the invention;
- Figure 13 shows various scan orders of blocks within a macroblock that depend on the position of a causal neighborhood with respect to the macroblock;
- Figure 14 depicts a device for decoding a picture divided into blocks according to a specific and non-limitative embodiment of the invention:
- Figure 15 represents an exemplary architecture of an decoding device according to a specific and non-limitative embodiment of the invention; and
- Figure 16 represents a flowchart of a method for decoding a picture Y from a bitstream according to a specific and non-limitative embodiment of the invention.

## 5. DETAILED DESCRIPTION OF THE INVENTION

The words "decoded" and "reconstructed" are often used as synonyms. Usually but not necessarily, the word "reconstructed" is used on the encoder side and the word "decoded" is used on the decoder side. A causal neighborhood is a neighborhood of a block comprising pixels of a reconstructed part of a picture.

**Figure 2** depicts a device 1 for encoding a picture Y divided into blocks according to a specific and non-limitative embodiment of the invention. The encoding device 1 comprises an input 10 configured to receive at least one picture from a source. The input 10 is linked to a module 12 configured to determine, for at least two blocks adjacent to a reconstructed part of the picture, a priority level responsive at least to directional gradients computed in a causal neighborhood of the block. A block is adjacent to a reconstructed part of the picture if one of its border is along the reconstructed part. The reconstructed part is a portion of the picture already encoded and reconstructed. As an example, the reconstructed part is the first line of macroblocks in the picture Y which is encoded in a raster scan order. According to a variant, the reconstructed part is a block/macroblock located at specific positions in the picture, e.g. in the center of the picture. According to yet another variant, the reconstructed part is an epitome of the picture Y. An epitome is a condensed representation of a picture. As an example the epitome is made of patches of texture belonging to the picture Y. On the encoder side, the reconstructed part can be used for prediction of other part of the picture not yet encoded. The module 12 is linked to a module 14 adapted to encode a part of the picture comprising the block whose priority level is the highest in a bitstream. The module 14 is linked to an output 16. The bitstream can be stored in a memory internal to the coding device 1 or external to it. According to a variant the bitstream can be sent to a destination.

**Figure 3** represents an exemplary architecture of the encoding device 1 according to a specific and non-limitative embodiment of the invention. The encoding device 1 comprises one or more processor(s) 110 , which is(are), for example, a CPU, a GPU and/or a DSP (English acronym of Digital Signal Processor), along with internal memory 120 (e.g. RAM, ROM, EPROM). The encoding device 1 comprises one or several Input/Output interface(s) 130 adapted to display output information and/or allow a user to enter commands and/or data (e.g. a keyboard, a mouse, a touchpad, a webcam); and a power source 140 which may be external to the encoding device 1. The encoding device 1 may also comprise network interface(s) (not shown). The picture Y may be obtained from a source. According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments of the invention, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

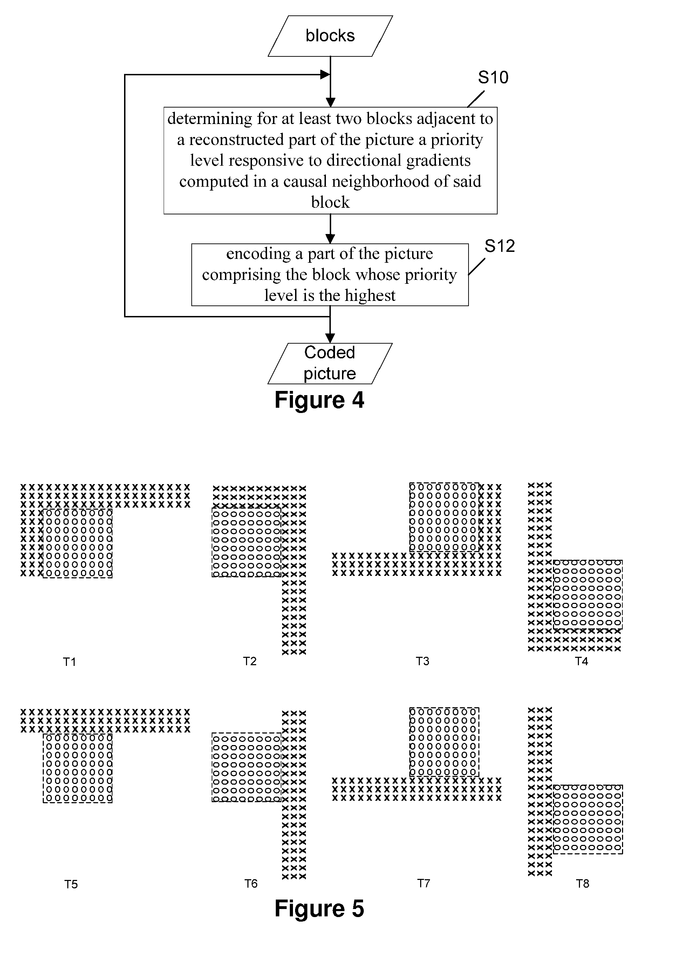

According to an exemplary and non-limitative embodiment of the invention, the encoding device 1 further comprises a computer program stored in the memory 120. The computer program comprises instructions which, when executed by the encoding device 1, in particular by the processor 110, make the encoding device 1 carry out the encoding method described with reference to figure 4. According to a variant, the computer program is stored externally to the encoding device 1 on a non-transitory digital data support, e.g. on an external storage medium such as a HDD, CD-ROM, DVD, a read-only and/or DVD drive and/or a DVD Read/Write drive, all known in the art. The encoding device 1 thus comprises an interface to read the computer program. Further, the encoding device 1 could access one or more Universal Serial Bus (USB)-type storage devices (e.g., "memory sticks.") through corresponding USB ports (not shown).

According to exemplary and non-limitative embodiments, the encoding device 1 is a device, which belongs to a set comprising:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

**Figure 4** represents a flowchart of a method for encoding a picture Y in a bitstream F, wherein the picture Y is divided into blocks according to a specific and non-limitative embodiment of the invention. The picture Y is for example received from a source on the input 10 of the encoding device 1.

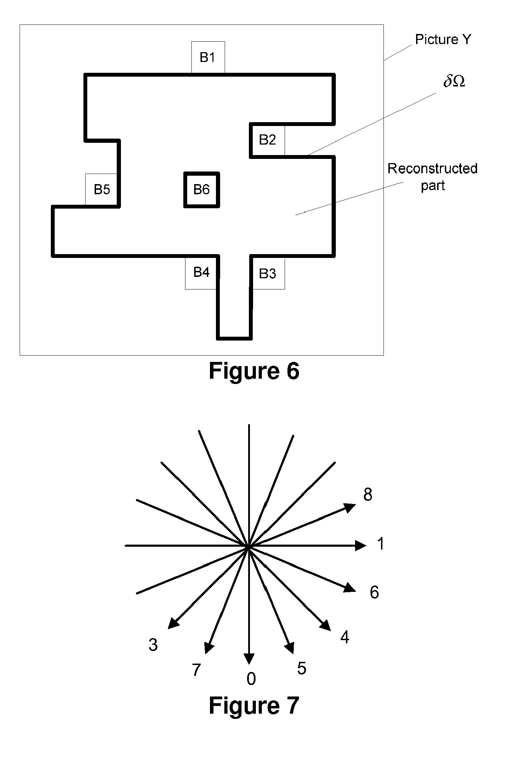

In a step S10, a priority level is determined, e.g. by the module 12, for at least two blocks adjacent to a reconstructed part of the picture. The priority level is responsive at least to directional gradients computed within a causal neighborhood of the block. A block can be a macroblock. **Figure 5** depicts a set of 8 patches that comprises a block and a template. A patch is thus larger than a block. A template is a causal neighborhood in which the directional gradients are to be computed. On this figure, the pixels identified by a circle are pixels of a current block whose priority value is to be calculated and the pixels identified by a cross are pixels of the template. In a variant, additional templates are used. On the figure 5, the width of the templates is equal to 3 pixels. In a variant, the width can be larger than 3, e.g. 4 pixels or smaller than 3, e.g. 2 pixels. In the following, only the templates of figure 5 are considered. Depending on the position the current block with respect to the reconstructed part a single template or a plurality of templates in the set of 8 templates depicted on figures 5a are considered. **Figure 6** represents a picture Y comprising a reconstructed part delimited by a frontier $\partial\Omega$. $\partial\Omega$ comprises pixels located inside the reconstructed part. On figure 6, blocks B1 to B6 are identified that are adjacent to the reconstructed part. The block B1 is located in such a way with respect to the reconstructed part that only the template T7 can be used for determining the priority level of this block. For the block B2, the following templates can be used: T1, T4, T5, T7 and T8. For the block B3, the following templates can be used: T1, T5 and T8. For the block B4, the following templates can be used: T2, T5 and T6. For the block B5, the following templates can be used: T3, T6 and T7. B6 is a block no yet encoded surrounded by the reconstructed part. For B6, all the templates can be used. The priority level P(Bi) is determined for a given block Bi, where i is an index identifying the block, as follows:

- calculating for each template Tj, where j is an index identifying the template that can be used for the block Bi, and for each spatial direction d compatible with Tj, energies of directional gradients E(Bi, Tj, d); and
- determining the highest energy of directional gradient and setting the priority value for the block equal to the highest energy of directional gradient, i.e. P(Bi) is equal to $\max_{j,d}(E(Bi, Tj, d))$.

d is a spatial direction such as the ones used for intra prediction in the H.264 video coding standard. It will be appreciated, however, that the invention is not restricted to these specific spatial directions. Other standards may define other spatial directions for intra prediction. With reference to **figure 7,** the spatial directions for intra prediction in H.264 are known as : horizontal (d=1), vertical (d=0), diagonal down-left (d=3), diagonal down-right (d=4), horizontal down (d=6), vertical left (d=7), horizontal up (d=8) and vertical right (d=5). d=2 corresponds to the DC mode which does not define a spatial direction.

The pixels in the template are pixels belonging to the reconstructed part, i.e. they are reconstructed pixels.

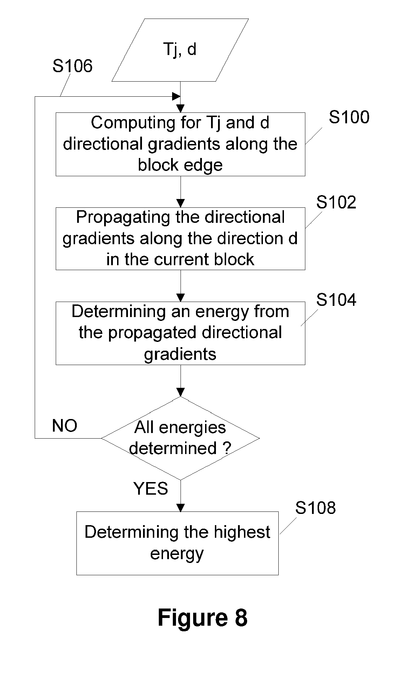

According to an exemplary and non-limitative embodiment depicted on **figure 8,** the priority level P(Bi) is determined for a given block Bi as follows:

a1) Computing (S100), for a causal neighborhood $T_j$, i.e. a template, in a set of causal neighborhoods and for a spatial direction d compatible with $T_j$, directional gradients along the block edge ;
a2) Propagating the directional gradients along the spatial direction d in the current block;
a3) Determining (S104) an energy from the propagated directional gradients; a4) Repeating (S106) steps a1) to a3) for each spatial direction d compatible with $T_j$;
a5) Repeating (S106) steps a1) to a4) for each causal neighborhood $T_j$ in the set of causal neighborhoods;
a6) Determining (S108) the highest energy, said highest energy being the priority for said current block.

Exemplarily, with the templates T1, T2, T3 and T4 all the spatial directions d are compatible. However, the spatial direction d=1 is not compatible with the template T5 because the pixels in the causal neighborhood are not available for the propagation.

The directional gradients are calculated on the causal neighborhood from a convolution masks moving on this causal neighborhood. $D_d$ with $d\in[0;8]\backslash\{2\}$ below are examples of such convolution masks:

$$D_0 = \begin{bmatrix} 0 & 0 & 0 \\ -1 & 0 & 1 \\ 0 & 0 & 0 \end{bmatrix} \quad D_1 = \begin{bmatrix} 0 & -1 & 0 \\ 0 & 0 & 0 \\ 0 & 1 & 0 \end{bmatrix} \quad D_3 = \begin{bmatrix} -1 & 0 & 0 \\ 0 & 0 & 0 \\ 0 & 0 & 1 \end{bmatrix} \quad D_4 = \begin{bmatrix} 0 & 0 & -1 \\ 0 & 0 & 0 \\ 1 & 0 & 0 \end{bmatrix}$$

$$D_5 = \begin{bmatrix} 0 & 0 & 1 \\ -1 & 0 & 0 \\ 0 & 0 & 0 \end{bmatrix} \quad D_6 = \begin{bmatrix} 0 & -1 & 0 \\ 0 & 0 & 0 \\ 1 & 0 & 0 \end{bmatrix} \quad D_7 = \begin{bmatrix} 0 & 0 & 0 \\ -1 & 0 & 0 \\ 0 & 0 & 1 \end{bmatrix} \quad D_8 = \begin{bmatrix} 0 & -1 & 0 \\ 0 & 0 & 0 \\ 0 & 0 & 1 \end{bmatrix}$$

The index is representation of the spatial direction d.

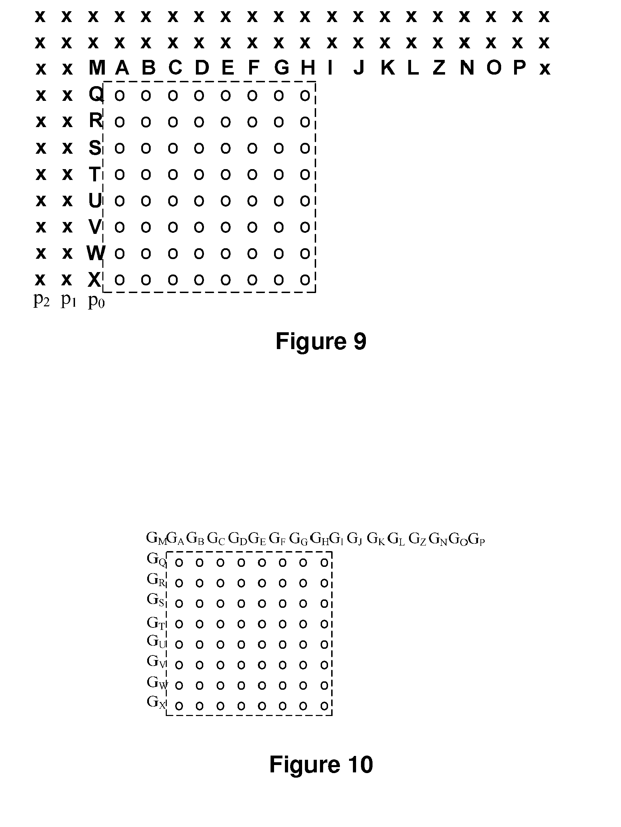

A directional gradient is calculated from a convolution mask D$_d$ of dimension (2N+1)x(2N+1). **Figure 9** represents a current block delimited by a dashed line and a causal neighborhood located top left (type T1). The gradients G(y,x) are calculated from reconstructed pixels I(y,x) in the causal neighborhood as follows :

$$G(y,x) = \sum_{i=-N}^{N} \sum_{J=-N}^{N} I(y + i, x + j).D_d(N + i, N + j) \qquad (5)$$

where y and x are the indices of the lines and columns of the pixels in the picture and i and j are the indices of the coefficients of the convolution mask F.

When a block is located on a border of the reconstructed part, the missing pixels are padded. Exemplarily, on figure 9 the pixels p0, p1 and p2 are copies of the respective pixels located on the line just above.

Thus with respect to the causal neighborhood represented on Figure 9 :

- For the pixels A to P

$$G(y,x) = \sum_{i=-N}^{N} \sum_{J=-N}^{N} I(y + i - N, x + j).F(N + i, N + j) \quad (6)$$

- For the pixels Q to X

$$G(y,x) = \sum_{i=-N}^{N} \sum_{J=-N}^{N} I(y + i, x + j - N).F(N + i, N + j) \quad (7)$$

- For the pixel M

$$G(y,x) = \sum_{i=-N}^{N} \sum_{J=-N}^{N} I(y + i - N, x + j - N).F(N + i, N + j) \quad (8)$$

For the convolution masks D$_d$, with d= 3 to 8, the formulas (6) to (8) are applied. For the vertical and horizontal directions d=0 and d=1, the gradients may be computed slightly differently. Indeed, the convolution masks D$_0$ and D$_1$ only have a single line respectively column of non-null coefficients. Consequently, the convolution can be made with the line of pixels just above the current block or the column of pixels just on the left of the current block respectively.

- For the pixels A to P

$$G(y,x) = \sum_{j=-N}^{N} I(y, x + j).F(i + N, N + j) \quad (10)$$

- For the pixels Q to X

$$G(y,x) = \sum_{i=-N}^{N} I(y+i,x).F(N+i,j+N) \quad (11)$$

There is no need to compute a gradient value for the pixel M for the directions d=0 and d=1, since the pixel M is not used during the propagation along these directions.

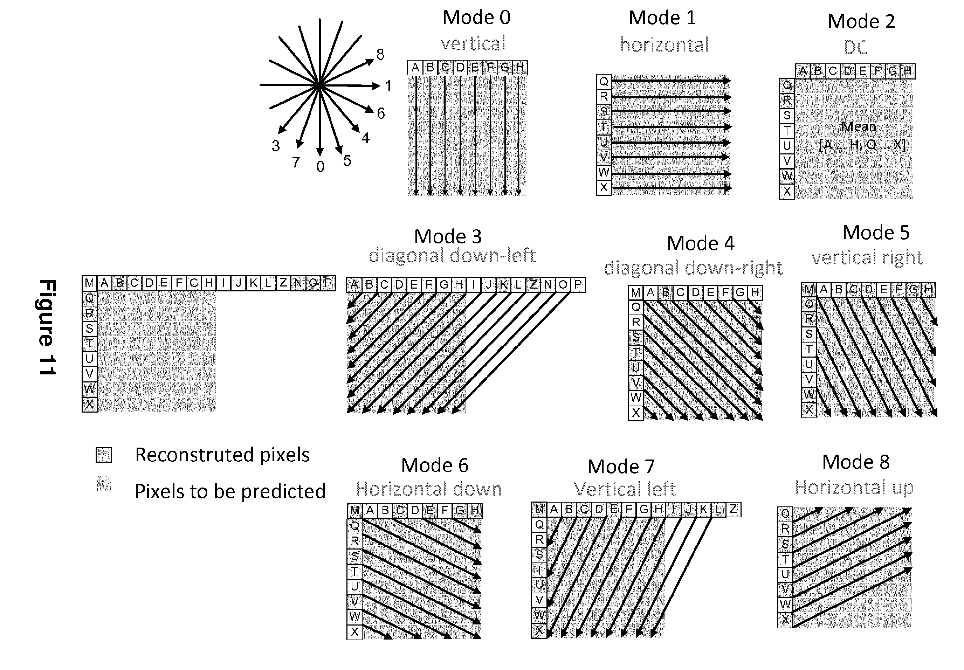

**Figure 10** represents the current block for which directional gradients for one direction are calculated along the frontier between the block and the causal neighborhood. A gradient prediction block is then obtained by propagating the gradients along the spatial direction d such as for classical block prediction as illustrated by figure 11. **Figure 11** represents various directional intra prediction modes defined in H.264 standard for a causal neighborhood located top left. Exemplarily, for the horizontal direction, the gradients are propagated from the left to the right, e.g. the gradients for the pixels located on the first line of the block have the value $G_Q$. For the direction vertical right, the gradient value for the top left pixel of the block has a value of $(G_A + G_M +1)/2$. The propagated directional gradients for the pixels (2,3) and (4,4) are $(G_A + 2G_B + G_C +2)/4$.

In a variant, the absolute values of the gradients can be propagated instead of the signed values. In the horizontal direction, the gradients are propagated from the left to the right, e.g. the gradients for the pixels located on the first line of the block have the value $|G_Q|$. For the direction vertical right, the propagated directional gradients for the pixels are (2,3) and (4,4) are $(|G_A| + 2|G_B| + |G_C| +2)/4$.

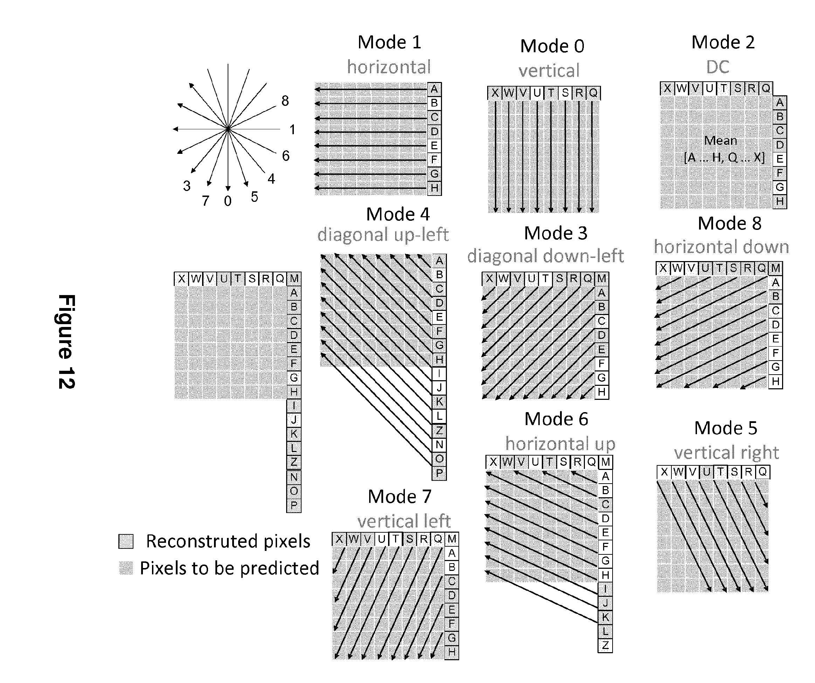

The directional intra predictions as defined in H.264 coding standard require a classical raster scan order of macroblock and zig-zag scan within the macroblock. In this case, the causal neighborhood used for the directional intra prediction is always located on the left and/or on the top of the block. With an adaptive scanning order, the causal neighborhood can be located anywhere around the block. The directional intra predictions as defined in H.264 and depicted on Figure 11 are thus adapted. Specifically, a rotation by 90°(see **Figure 12),** by 180°and by 270°is applied on all the direct ional intra predictions to obtain directional intra predictions adapted to the various causal neighborhoods. The index of the mode as defined in H.264 is possibly kept whatever the orientation. This makes it possible to correctly predict the index using the most probable mode rule of the H.264 standard. Exemplarily, the horizontal prediction mode is always associated with the index 1 even when the pixel on the right are used for prediction. **Figure 12** represents the directional intra prediction modes for a causal neighborhood located on the top and on the right of a block to encode. These prediction modes correspond to the modes defined in H.264 and rotated by 90°on the right.

The energy representative of the impact of a contour of direction d is calculated by summing the absolute values of the gradients in the gradient prediction block. For a gradient prediction block $Gr_d$ (of dimension LxM), the energy $E_d$ is computed as follows :

$$E_d = \sum_{i=-0}^{L-1} \sum_{J=0}^{M-1} |Gr_d(i,j)| \quad (12)$$

In a variant:

$$E_d = \arg \max_{i,j} |Gr_d(i,j)| \quad (13)$$

with d = 0,..8 and d ≠ 2.

The method favors (i.e. give higher priority in the encoding order) the blocks having sharp contours on their frontiers compared to blocks whose neighborhood exhibits weaker gradients). Even if the current block is finally coded in inter or spatial block matching mode, the block probably contains structures which helps in the motion estimation and block matching processing.

Once the priority P(Bi) is determined for at least two blocks adjacent to the frontier $\delta\Omega$, the block $B_{next}$ with the highest priority level $P_{max}$ is identified. If two blocks have the same priority that is equal to $P_{max}$, the first block encountered when scanning the picture blocks from top to bottom and left to right is identified.

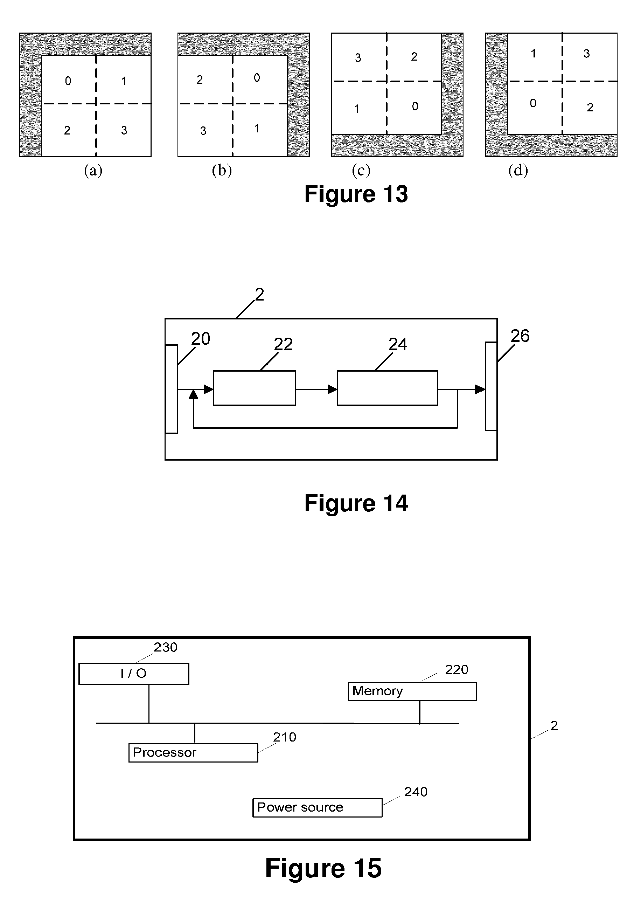

In a step S12, a part of the picture comprising the block $B_{next}$ whose priority level is the highest is encoded, e.g. by the module 14. According to a first embodiment, the block $B_{next}$ is a macroblock $MB_{next}$. According to a variant, the block $B_{next}$ is a block smaller than a macroblock. In the latter case, a macroblock $MB_{next}$ encompassing the block $B_{next}$ is identified. The macroblock $MB_{next}$ is thus encoded. To this aim, the blocks inside the macroblock $MB_{next}$ are

scanned according to a classical zig-zag scan order as depicted on **figure 13(a)**: top left block first followed by top right block, bottom left block and bottom right block. According to a variant, the zig-zag scan order of the blocks within the macroblock is adapted on the basis of the position of the reconstructed part (or causal neighborhood) with respect to the macroblock as depicted on figure 13. On this figure the reconstructed part on the border of the macroblock is represented in grey. The blocks within the macroblock are associated with an index which indicates the order of coding. Consequently, the block with the highest priority value is not necessarily encoded first. For example, with respect to figure 13(b) the block with index 2 can be the one with the highest priority while the block on its right is encoded first. According to yet another variant, the step S10 and S12 are iterated within the macroblock $MB_{next}$ to determine the encoding order to the blocks within the macroblock. In this case, the scan order of the blocks within the macroblock is not a zig-zag scan order anymore but is adapted to the content. Encoding a block usually comprises determining a predictor, calculating residues between the block and the predictor. The residues are then transformed (e.g. by a DCT like transform, where DCT is the English acronym of "Discrete Cosine Transform") and quantized before being entropy coded in a bitstream.

Determining a predictor comprises determining a prediction mode which is also encoded in the bitstream. Indeed, a block can be predicted in various ways. Well-known prediction techniques are directional intra prediction as defined in H.264 and HEVC coding standards, template based prediction (e.g. template matching), multi-patches based prediction (e.g Non local mean (NLM), Locally linear embedding (LLE)) are other examples of such prediction techniques. According to a specific embodiment, the highest priority level determined in step S10 is associated with one of the template defined on figure 5. This template may be used for determining the predictor in the template and multi-patches based prediction methods for the block $B_{next}$.

The selection of one prediction mode among the various prediction modes can be made according to a well-known rate-distortion technique, i.e. the prediction mode that provides the best compromise in terms of reconstruction error and bit-rate is selected.

Once a block or a macroblock is encoded and reconstructed, the steps S10 and S12 can be iterated until the whole picture is encoded. The method can also be applied on each picture of a sequence of pictures to encode the whole sequence.

The bitstream F is for example transmitted to a destination by the output 16 of the encoding device 1.

**Figure 14** depicts a device 2 for decoding a picture divided into blocks according to a specific and non-limitative embodiment of the invention.

The decoding device 2 comprises an input 20 configured to receive a bitstream from a source. The input 20 is linked to a module 22 configured to determine for each of at least two blocks adjacent to a reconstructed part of the picture a priority level responsive at least to directional gradients computed in a causal neighborhood of the block. The reconstructed part is a portion of the picture already decoded. On the decoder side, the reconstructed part can also be named decoded part. As an example, the reconstructed part is the first line of macroblocks in the picture Y which is decoded in a raster scan order. According to a variant, the reconstructed part is a block/macroblock located at specific positions in the picture, e.g. in the center of the picture. According to yet another variant, the reconstructed part is an epitome of the picture Y. An epitome is a condensed representation of a picture. As an example, the epitome is made of patches of texture belonging to the picture Y. On the decoder side, the reconstructed part can be used for prediction of other part of the picture not yet decoded. A block is adjacent to a reconstructed part of the picture if one of its border is along the reconstructed part. The module 22 is linked to a module 24 adapted to decode a part of the picture comprising the block whose priority level is the highest. The module 24 is linked to an output 26. When a picture is decoded, it can be stored in a memory internal to the decoding device 2 or external to it. According to a variant the decoded picture can be sent to a destination.

**Figure 15** represents an exemplary architecture of the decoding device 2 configured to decode a picture Y from a bitstream, wherein the picture is divided into blocks according to an exemplary embodiment of the invention. The decoding device 2 comprises one or more processor(s) 210 , which is(are), for example, a CPU, a GPU and/or a DSP (English acronym of Digital Signal Processor), along with internal memory 220 (e.g. RAM, ROM, EPROM). The decoding device 2 comprises one or several Input/Output interface(s) 230 adapted to display output information and/or allow a user to enter commands and/or data (e.g. a keyboard, a mouse, a touchpad, a webcam); and a power source 240 which may be external to the decoding device 2. The decoding device 2 may also comprise network interface(s) (not shown). The bitstream may be obtained from a source. According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments of the invention, the decoded picture may be sent to a destination. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

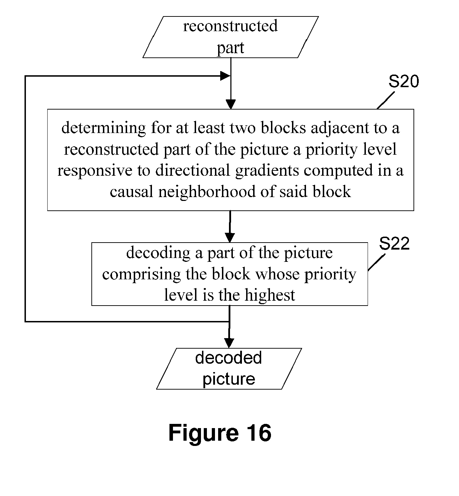

According to an exemplary and non-limitative embodiment of the invention, the decoding device 2 further comprises a computer program stored in the memory 220. The computer program comprises instructions which, when executed by the decoding device 2, in particular by the processor 210, make the decoding device 2 carry out the decoding method described with reference to figure 16. According to a variant, the computer program is stored externally to the decoding device 2 on a non-transitory digital data support, e.g. on an external storage medium such as a HDD, CD-ROM, DVD, a read-only and/or DVD drive and/or a DVD Read/Write drive, all known in the art. The decoding device 2 thus comprises an interface to read the computer program. Further, the decoding device 2 could access one or more Universal Serial Bus (USB)-type storage devices (e.g., "memory sticks.") through corresponding USB ports (not shown).

According to exemplary and non-limitative embodiments, the decoding device 2 is a device, which belongs to a set comprising:

- a mobile device ;
- a communication device ;
- a game device ;
- a set top box;
- a TV set;
- a tablet (or tablet computer) ;
- a laptop ;
- a display and
- a decoding chip.

**Figure 16** represents a flowchart of a method for decoding a picture from a bitstream F, wherein the picture is divided into blocks according to a specific and non-limitative embodiment of the invention. The bitstream F is for example received on the input 20 of the decoding device.

In a step S20, a priority level is determined, e.g. by the module 22, for at least two blocks adjacent to a reconstructed part of the picture. The priority level is responsive at least to directional gradients computed in a causal neighborhood of the block. A block can be a macroblock. The step S20 is identical to the step S10 on the encoding side. Consequently, the step S20 is not further disclosed. All the variants disclosed with respect to the encoding method for step S10 apply to S20, in particular the non-limitative embodiment disclosed with respect to figure 8.

In a step S22, the module 24 decodes a part of the picture comprising the block whose priority level is the highest. According to a first embodiment, the block $B_{next}$ is a macroblock $MB_{next}$. According to a variant, the block $B_{next}$ is a block smaller than a macroblock. In the latter case, a macroblock $MB_{next}$ encompassing the block $B_{next}$ is identified. The macroblock $MB_{next}$ is thus decoded. To this aim, the blocks inside the macroblock are scanned according to a classical zig-zag scan order as depicted on **figure 13(a):** top left block first followed by top right block, bottom left block and bottom right block. According to a variant, the zig-zag scan order of the blocks within the macroblock is adapted on the basis of the position of the reconstructed part with respect to the macroblock as depicted on figure 13. Consequently, the block with the highest priority value is not necessarily decoded first. For example, with respect to figure 13(b) the block with index 2 can be the one with the highest priority while the block on its right is decoded first.

Decoding a block usually comprises determining a predictor and residues. Determining the residues comprises entropy decoding of a part of the bitstream F representative of the block to obtain coefficients, dequantizing and transforming the coefficients to obtain residues. The residues are added to the predictor to obtain a decoded block. The transforming on the decoding side is the inverse of the transforming on the encoder side.

Determining a predictor comprises determining a prediction mode which is usually decoded from the bitstream. According to a specific embodiment, the highest priority level determined in step S20 is associated with one of the template defined on figure 5. This template may be used for determining the predictor in the template based prediction methods for the block $B_{next}$.

Once a block or a macroblock is decoded, the steps S20 and S22 can be iterated until the whole picture is decoded. The method can also be applied on each picture of a sequence of pictures to decode the whole sequence.

The decoded picture is for example sent to a destination by the output 26 of the decoding device 2.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

The invention finds its interest in all domains concerned with the image epitome reduction. Applications related to video compression and representations of videos are concerned.

**Claims**

1. A method for decoding a picture divided into blocks comprising at least one iteration of:

   a) determining (S20) for each of at least two blocks adjacent to a reconstructed part of the picture a priority level responsive at least to directional gradients computed in a causal neighborhood of said block; and
   b) decoding (S22) a part of the picture comprising the block whose priority level is the highest.

2. The method of claim 1, wherein determining (S20) for each of at least two blocks adjacent to a reconstructed part of the picture a priority level comprises:

   a1) computing, for a spatial direction, directional gradients along the block edge;
   a2) propagating the directional gradients along the spatial direction; and
   a3) determining an energy from the propagated directional gradients.

3. The method of claim 2, wherein the spatial direction belongs to a plurality of spatial directions and wherein the method further comprises:

> a4) repeating steps a1) to a3) for each spatial direction of said plurality of spatial directions; and
> a6) determining the highest energy, said highest energy being the priority for said current block.

4. The method of claim 3, wherein the causal neighborhood belongs to a plurality of causal neighborhoods and wherein the method further comprises before step a6):

> a5) repeating steps a1) to a4) for each causal neighborhood in the set of causal neighborhoods.

5. The method according to any of claims 1 to 4, wherein the reconstructed part belongs to the group comprising:

> - the blocks located on the borders of the picture;
> - an epitome of the picture;
> - a block located at a specific position in the picture.

6. The method according to any of claims 1 to 5, wherein, in step b), the part of the picture comprising the block whose priority level is the highest is a macroblock and wherein decoding said macroblock comprises at least one iteration of:

> a) determining for at least two blocks in the macroblock adjacent to the reconstructed part of the picture a priority level; and
> b) decoding first the block of said macroblock whose priority level is the highest.

7. The method according to any of claims 1 to 5, wherein, in step b), the part of the picture comprising the block whose priority level is the highest is a macroblock and wherein decoding said macroblock comprises:

> - determining a zig-zag scan order of blocks within the macroblock on the basis of at least the spatial position of a causal neighborhood with respect to the macroblock;
> - decoding said blocks within the macroblock according to said zig-zag scan order.

8. The method according to any of claims 1 to 7, wherein the part of the picture comprising the block whose priority level is the highest is a macroblock encompassing said block.

9. The method according to any of claims 1 to 7, wherein the at least two blocks are macroblocks and wherein the part of the picture comprising the block whose priority level is the highest is the macroblock whose priority level is the highest.

10. A method for encoding a picture divided into blocks comprising at least one iteration of:

> a) determining (S10) for each of at least two blocks adjacent to a reconstructed part of the picture a priority level responsive at least to directional gradients computed in a causal neighborhood of said block; and
> b) encoding (S12) a part of the picture comprising the block whose priority level is the highest.

11. The method of claim 10, wherein determining (S10) for each of at least two blocks adjacent to a reconstructed part of the picture a priority level comprises:

> a1) computing for a spatial direction directional gradients along the block edge;
> a2) propagating the directional gradients along the spatial direction; and
> a3) determining an energy from the propagated directional gradients.

12. The method of claim 11, wherein the spatial direction belongs to a plurality of spatial directions and wherein the method further comprises:

> a4) repeating steps a1) to a3) for each spatial direction of said plurality of spatial directions; and
> a6) determining the highest energy, said highest energy being the priority for said current block.

13. The method of claim 12, wherein the causal neighborhood belongs to a plurality of causal neighborhoods and wherein the method further comprises before step a6):

a5) repeating steps a1) to a4) for each causal neighborhood in the set of causal neighborhoods.

**14.** A device for decoding a picture divided into blocks comprising at least one processor (210) configured to:

- determine (S20) for at least two blocks adjacent to a reconstructed part of the picture a priority level responsive at least to directional gradients computed in a causal neighborhood of said block; and
- decode (S22) a part of the picture comprising the block whose priority level is the highest.

**15.** A device for decoding a picture divided into blocks comprising:

- means for determining (22) for at least two blocks adjacent to a reconstructed part of the picture a priority level responsive at least to directional gradients computed in a causal neighborhood of said block; and
- means for decoding (24) a part of the picture comprising the block whose priority level is the highest.

**16.** The device according to claim 15, wherein said device for decoding is configured to execute the steps of the decoding method according to any of claims 1 to 9.

**17.** A device for encoding a picture divided into blocks comprising at least one processor configured to:

- determine (S10) for at least two blocks adjacent to a reconstructed part of the picture a priority level responsive at least to directional gradients computed in a causal neighborhood of said block; and
- encode (S12) a part of the picture comprising the block whose priority level is the highest.

**18.** A device for encoding a picture divided into blocks comprising:

- means for determining (12) for at least two blocks adjacent to a reconstructed part of the picture a priority level responsive at least to directional gradients computed in a causal neighborhood of said block; and
- means for encoding (14) a part of the picture comprising the block whose priority level is the highest.

**19.** The device according to claim 18, wherein said device for encoding is configured to execute the steps of the encoding method according to any of claims 10 to 13.

Y

**Figure 1 – state of the art**

1

10      12      14      16

**Figure 2**

130

I / O

120

Memory

110

Processor

1

140

Power source

**Figure 3**

**Figure 4**

**Figure 5**

**Figure 6**

**Figure 7**

S106

Tj, d

Computing for Tj and d directional gradients along the block edge — S100

Propagating the directional gradients along the direction d in the current block — S102

Determining an energy from the propagated directional gradients — S104

NO — All energies determined ?

YES

Determining the highest energy — S108

**Figure 8**

x x x x x x x x x x x x x x x x x x x

x x x x x x x x x x x x x x x x x x x

x x M A B C D E F G H I J K L Z N O P x

x x Q o o o o o o o o o

x x R o o o o o o o o o

x x S o o o o o o o o o

x x T o o o o o o o o o

x x U o o o o o o o o o

x x V o o o o o o o o o

x x W o o o o o o o o o

x x X o o o o o o o o o

$p_2$ $p_1$ $p_0$

## Figure 9

$G_M G_A G_B G_C G_D G_E G_F G_G G_H G_I G_J G_K G_L G_Z G_N G_O G_P$

$G_Q$ o o o o o o o o o

$G_R$ o o o o o o o o o

$G_S$ o o o o o o o o o

$G_T$ o o o o o o o o o

$G_U$ o o o o o o o o o

$G_V$ o o o o o o o o o

$G_W$ o o o o o o o o o

$G_X$ o o o o o o o o o

## Figure 10

Figure 11

Mode 0
vertical

Mode 1
horizontal

Mode 2
DC

Mean
[A ... H, Q ... X]

Mode 3
diagonal down-left

Mode 4
diagonal down-right

Mode 5
vertical right

Reconstruted pixels

Pixels to be predicted

Mode 6
Horizontal down

Mode 7
Vertical left

Mode 8
Horizontal up

EP 2 938 074 A1

Figure 12

EP 2 938 074 A1

(a)    (b)    (c)    (d)

**Figure 13**

**Figure 14**

**Figure 15**

Figure 16

# EP 2 938 074 A1

Europäisches Patentamt
European Patent Office
Office européen des brevets

## EUROPEAN SEARCH REPORT

Application Number

EP 15 16 3796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/247657 A1 (KALEVO OSSI [FI] ET AL) 9 October 2008 (2008-10-09) * paragraph [0015] - paragraph [0016]; figure 2 * * paragraph [0043] - paragraph [0063] * * paragraph [0065] - paragraph [0066]; figures 3,5; table 4 * | 1-19 | INV. H04N19/117 H04N19/14 H04N19/105 H04N19/176 H04N19/61 H04N19/11 H04N19/593 |
| X | WO 2010/102935 A1 (THOMSON LICENSING [FR]; THOREAU DOMINIQUE [FR]; FRANCOIS EDOUARD [FR];) 16 September 2010 (2010-09-16) * page 2, line 18 - page 4, line 6; figure 2 * * page 7, line 2 - page 8, line 16 * | 1-19 | |
| X | US 2011/274169 A1 (PAZ ADAR [IL]) 10 November 2011 (2011-11-10) * paragraph [0052] - paragraph [0065]; figures 4a,4b * * paragraph [0015] - paragraph [0019]; figures 1a,1b * | 1-19 | |
| X | US 2012/195378 A1 (ZHENG YUNFEI [US] ET AL) 2 August 2012 (2012-08-02) * paragraph [0098] - paragraph [0103]; figure 4 * * paragraph [0112] - paragraph [0117]; figures 6,7 * | 1-19 | TECHNICAL FIELDS SEARCHED (IPC) H04N |

-/--

The present search report has been drawn up for all claims

| Place of search | Date of completion of the search | Examiner |
|---|---|---|
| Munich | 27 July 2015 | Moschetti, Fulvio |

EPO FORM 1503 03.82 (P04C01)

Europäisches
Patentamt

European
Patent Office

Office européen
des brevets

# EUROPEAN SEARCH REPORT

Application Number

EP 15 16 3796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANONYMOUS: "Tool Experiment 6: Intra Prediction Improvement", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SITE/,, no. JCTVC-B306, 15 August 2010 (2010-08-15), XP030007711, ISSN: 0000-0046 * page 8, paragraph 5 - page 9 * * page 11 * ----- | 1-19 | |
| | | | **TECHNICAL FIELDS SEARCHED (IPC)** |

The present search report has been drawn up for all claims

| Place of search | Date of completion of the search | Examiner |
|---|---|---|
| Munich | 27 July 2015 | Moschetti, Fulvio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 15 16 3796

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2015

| Patent document cited in search report | Publication date | Patent family member(s) | Publication date |
|---|---|---|---|
| US 2008247657 A1 | 09-10-2008 | AT 507678 T | 15-05-2011 |
| | | AU 3027601 A | 31-07-2001 |
| | | BR 0107706 A | 19-11-2002 |
| | | CA 2397090 A1 | 26-07-2001 |
| | | CN 1418436 A | 14-05-2003 |
| | | CN 1658677 A | 24-08-2005 |
| | | EP 1249132 A1 | 16-10-2002 |
| | | FI 20000131 A | 22-07-2001 |
| | | HK 1054288 A1 | 03-02-2006 |
| | | HK 1080653 A1 | 10-07-2009 |
| | | JP 2003520531 A | 02-07-2003 |
| | | JP 2008054335 A | 06-03-2008 |
| | | JP 2012170122 A | 06-09-2012 |
| | | US 2001017942 A1 | 30-08-2001 |
| | | US 2005254717 A1 | 17-11-2005 |
| | | US 2008247657 A1 | 09-10-2008 |
| | | WO 0154416 A1 | 26-07-2001 |
| | | ZA 200205506 A | 16-01-2003 |
| WO 2010102935 A1 | 16-09-2010 | TW 201034467 A | 16-09-2010 |
| | | WO 2010102935 A1 | 16-09-2010 |
| US 2011274169 A1 | 10-11-2011 | NONE | |
| US 2012195378 A1 | 02-08-2012 | CN 103348677 A | 09-10-2013 |
| | | EP 2668780 A1 | 04-12-2013 |
| | | JP 2014506755 A | 17-03-2014 |
| | | KR 20130119494 A | 31-10-2013 |
| | | US 2012195378 A1 | 02-08-2012 |
| | | WO 2012102929 A1 | 02-08-2012 |